(19) Europäisches Patentamt
European Patent Office
Office européen des brevets

(11) **EP 3 156 170 A1**

(12) **EUROPEAN PATENT APPLICATION**
published in accordance with Art. 153(4) EPC

(43) Date of publication:
**19.04.2017 Bulletin 2017/16**

(51) Int Cl.:
*B23K 35/30* (2006.01)       *C22C 38/00* (2006.01)
*C22C 38/24* (2006.01)       *C22C 38/48* (2006.01)

(21) Application number: **15806825.4**

(22) Date of filing: **11.06.2015**

(86) International application number:
**PCT/JP2015/066944**

(87) International publication number:
**WO 2015/190574 (17.12.2015 Gazette 2015/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.06.2014 JP 2014120757**

(71) Applicant: **Kabushiki Kaisha Kobe Seiko Sho (Kobe Steel, Ltd.)**
**Kobe-shi, Hyogo 651-8585 (JP)**

(72) Inventors:
• **MIYAMURA, Takeo**
**Kobe-shi**
**Hyogo 651-2271 (JP)**
• **NAMBA, Shigenobu**
**Kobe-shi**
**Hyogo 651-2271 (JP)**
• **IKEDA, Tetsunao**
**Fujisawa-shi**
**Kanagawa 251-8551 (JP)**
• **ISHIDA, Masatoshi**
**Fujisawa-shi**
**Kanagawa 251-8551 (JP)**

(74) Representative: **Müller-Boré & Partner**
**Patentanwälte PartG mbB**
**Friedenheimer Brücke 21**
**80639 München (DE)**

(54) **BUILDUP WELDED BODY**

(57)     A welded metal which has a composition containing specific amounts of Ni, Cr, Nb, C, Si, Mn, P, S, Cu, Mo, V and N, with the balance made up of Fe and inevitable impurities and satisfying formula (A) is formed, by buildup welding, on the surface of a base material which has a composition containing specific amounts of C, Cr, Mo, V, Nb, Si, Mn, P, S, Cu, Ni and N, with the balance made up of Fe and inevitable impurities. At this time, the Cr contents and the C contents of the base material and the welded metal are set to satisfy formula (B). In this connection, the atomic symbols in parentheses represent the contents (mass%) of the respective elements.

$$[Cr]+[Mo]+1.5\times[Si]+0.5\times[Nb]+2.5\times[Mn]-[0.2]\times[Ni]+30\times[C] \leq 21.5\ldots(A)$$

$$([Crw]/[Crm])\times([Cm]/[Cw]) \leq 15\ldots(B)$$

## Description

Technical Field

The present invention relates to an overlay weld in which a weld metal has been overlay-welded on a surface of a base metal. More particularly, the present invention relates to an overlay weld in which an overlay weld metal has been deposited on a surface of a ferritic heat-resistant steel.

Background Art

Ferritic heat-resistant steels containing about 2 to 12 mass% of Cr, which are heat-resistant structural materials, are used as the materials of pressure vessels for use at high temperatures in chemical plants, etc. (see, for example, Patent Document 1). Heat-resistant structural materials such as ferritic heat-resistant steels have a fine metallographic structure which is formed from the austenite phase through a quenching/tempering treatment and is called a tempering martensite structure. A large pressure vessel is produced by producing a plurality of ring-shaped structures made of such a heat-resistant structural material and joining these ring-shaped structures by circumferential welding conducted along the axial direction.

The corrosion resistance of heat-resistant materials depends strongly on the Cr contents of the steels. Because of this, ferritic heat-resistant steels are inferior in corrosion resistance to austenitic stainless steels containing Cr in an amount of, for example, 18 mass% or more, and are not considered to have sufficient resistance to corrosion by polythionic acids and hydrogen sulfide which generate in chemical plants. Meanwhile, austenitic stainless steels have a problem in that these steels have a high coefficient of thermal expansion and hence are unsuitable for thick-walled members, large forged articles, and the like which are for use at high temperatures.

Consequently, a large pressure vessel for use in chemical plants has conventionally been configured of a ferritic heat-resistant steel as a base metal and an overlay weld metal constituted of an austenitic stainless steel and deposited on those surfaces of the base metal which come into contact with corrosive ingredients.

When producing such an overlay weld required to have heat resistance, a post weld heat treatment (PWHT) is conducted after joining together pieces of the base metal, and the circumferential welds generally have improved fracture toughness due to the PWHT. Meanwhile, in the case where a base metal having high heat resistance is used, it is necessary to conduct the PWHT at a higher temperature. However, there is a problem in that the PWHT conducted at a high temperature renders the overlay weld metal brittle and as thermal stress is repeatedly imposed when the weld is used at high temperatures, the overlay welds become prone to crack.

Examples of techniques for reducing the influences of a PWHT on the welds include a method in which the base metal is made to have a specific composition to thereby prevent the austenite grains of the overlay stainless steel present in the vicinity of the boundary layer from enlarging and to simultaneously inhibit the diffusion and transfer of carbon from the base metal to the stainless steel during the PWHT (see Patent Document 2).

Prior Art Documents

Patent Documents

   Patent Document 1: JP-A-2014-1702
   Patent Document 2: JP-A-H03-264647

Summary of the Invention

Problem that the Invention is to Solve

However, in the technique described in Patent Document 2, attention was directed to the influence of hydrogen to prevent the separation of overlay weld metal and attention has not been directed to deformability that is a mechanical property of the welds configured of a base metal and a weld metal.

Accordingly, a main object of the present invention is to provide an overlay weld having excellent bending crack resistance at a welded part.

Means for Solving the Problem

The present inventors made investigations on the problem that overlay welds deteriorate in bending crack resistance through a high-temperature PWHT, and have found that the bending crack resistance of the welded part is improved by improving both the ductility of a boundary region between the weld metal and the base metal and the ductility of the weld metal itself. The present invention has been thus achieved. Specifically, the ductility of the boundary region is attributable to the reaction of Cr contained in the weld metal with C contained in the base metal and to the resulting hardening of the boundary layer and, hence, the ductility of the boundary region can be improved by regulating the product of the Cr content ratio between the weld metal and the base metal and the C content ratio therebetween to a value within a specific range. Meanwhile, the ductility of the weld metal can be improved by reducing the Mn content of the weld metal and regulating the value of a parameter calculated from the contents of components of the weld metal so as to be within a specific range.

That is, the overlay weld of the present invention is an overlay weld in which a weld metal has been overlay-welded on a surface of a base metal, wherein

the base metal has a composition which contains 0.07 to 0.12 mass% of C, 2.0 to 10 mass% of Cr, 0.5 to 1.5 mass% of Mo, 0.02 to 0.5 mass% of V, and 0.01 to 0.2 mass% of Nb, and has an Si content regulated to 0.6 mass% or less, an Mn content regulated to 1 mass% or less, a P content regulated to 0.04 mass% or less, an S content regulated to 0.02 mass% or less, a Cu content regulated to 0.3 mass% or less, an Ni content regulated to 0.6 mass% or less, and an N content regulated to 0.1 mass% or less, with the remainder being Fe and inevitable impurities,

the weld metal has a composition which contains 9 to 11 mass% of Ni, 18 to 21 mass% of Cr, and 0.1 to 1 mass% of Nb, and has a C content regulated to 0.08 mass% or less, an Si content regulated to 1.0 mass% or less, an Mn content regulated to 0.9 mass% or less, a P content regulated to 0.04 mass% or less, an S content regulated to 0.03 mass% or less, a Cu content regulated to 0.75 mass% or less, an Mo content regulated to 0.75 mass% or less, a V content regulated to 0.15 mass% or less, and an N content regulated to 0.08 mass% or less, with the remainder being Fe and inevitable impurities, and which satisfies the following mathematical expression 1, where [Cr] is the content of Cr (mass%), [Mo] is the content of Mo (mass%), [Si] is the content of Si (mass%), [Nb] is the content of Nb (mass%), [Mn] is the content of Mn (mass%), [Ni] is the content of Ni (mass%), and [C] is the content of C (mass%), and

the overlay weld satisfies the following mathematical expression 2, where [Crw] is the content of Cr (mass%) in the weld metal, [Crm] is the content of Cr (mass%) in the base metal, [Cw] is the content of C (mass%) in the weld metal, and [Cm] is the content of C (mass%) in the base metal.

[Math. 1]

$$[Cr]+[Mo]+1.5\times[Si]+0.5\times[Nb]+2.5\times[Mn]-0.2\times[Ni]+30\times[C] \leq 21.5$$

[Math. 2]

$$([Crw]/[Crm])\times([Cm]/[Cw]) \leq 15$$

Effect of the Invention

According to the present invention, it is possible to improve the bending crack resistance at a welded part and to enable overlay welds which have undergone a high-temperature PWHT to have improved deformability.

Brief Description of the Drawing

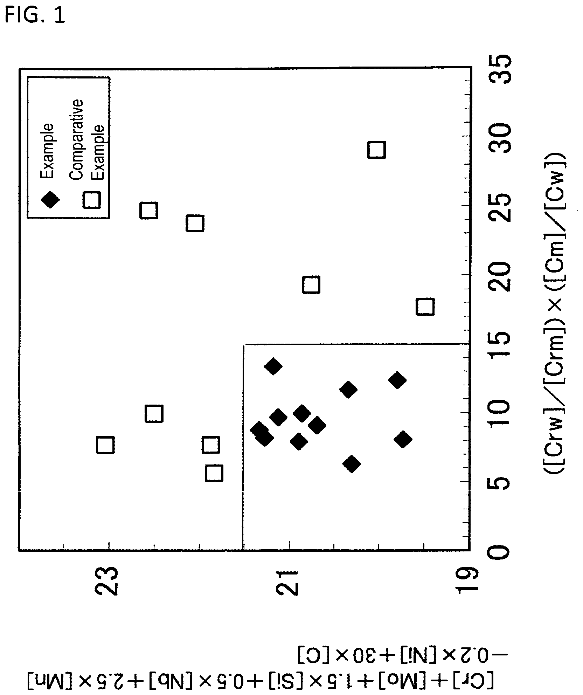

[FIG. 1] FIG. 1 is a graphic presentation in which the product of the Cr content ratio between each weld metal and the corresponding base metal and the C content ratio therebetween has been plotted as abscissa, the product being represented by the mathematical expression 4, and a parameter calculated from the contents of components of each weld metal has been plotted as ordinate, the parameter being represented by the mathematical expression 3. This graphic presentation shows relationships between these two values in specimens of Examples and Comparative Examples.

Modes for Carrying Out the Invention

Modes for carrying out the present invention are explained below in detail. The present invention should not be construed as being limited to the embodiments explained below.

The overlay weld according to this embodiment has a structure required to have heat resistance, such as pressure vessels for use at high temperatures, and has a structure in which a weld metal has been overlay-welded on a surface of the base metal. For example, the overlay weld is an overlay-welded joint.

The base metal in the overlay weld according to this embodiment has a composition which contains 0.07 to 0.12 mass% of C, 2.0 to 10 mass% of Cr, 0.5 to 1.5 mass% of Mo, 0.02 to 0.5 mass% of V, and 0.01 to 0.2 mass% of Nb and which has an Si content regulated to 0.6 mass% or less, an Mn content regulated to 1 mass% or less, a P content regulated to 0.04 mass% or less, an S content regulated to 0.02 mass% or less, a Cu content regulated to 0.3 mass% or less, an Ni content regulated to 0.6 mass% or less, and an N content regulated to 0.1 mass% or less, with the remainder being Fe and inevitable impurities.

There are SUS309, SUS347, and the like as metals to be deposited by overlay welding in order to improve the corrosion resistance of base metals. In the overlay weld according to this embodiment, the weld metal is an austenitic stainless steel having a composition which contains 9 to 11 mass% of Ni, 18 to 21 mass% of Cr, and 0.1 to 1 mass% of Nb and has a C content regulated to 0.08 mass% or less, an Si content regulated to 1.0 mass% or less, an Mn content regulated to 0.9 mass% or less, a P content regulated to 0.04 mass% or less, an S content regulated to 0.03 mass% or less, a Cu content regulated to 0.75 mass% or less, an Mo content regulated to 0.75 mass% or less, a V content regulated to 0.15 mass% or less, and an N content regulated to 0.08 mass% or less, with the remainder being Fe and inevitable impurities, and which satisfies the following mathematical expression 3.

[Math. 3]

$$[Cr]+[Mo]+1.5\times[Si]+0.5\times[Nb]+2.5\times[Mn]-0.2\times[Ni]+30\times[C] \leq 21.5$$

In the mathematical expression 3, [Cr] is the content of Cr (mass%), [Mo] is the content of Mo (mass%), [Si] is the content of Si (mass%), [Nb] is the content of Nb (mass%), [Mn] is the content of Mn (mass%), [Ni] is the content of Ni (mass%), and [C] is the content of C (mass%).

Furthermore, the overlay weld according to this embodiment has a relationship between the contents of Cr and C in the weld metal and the contents of Cr and C in the base metal, the relationship satisfying the following mathematical expression 4. In the following mathematical expression 4, [Crw] is the content of Cr (mass%) in the weld metal, [Crm] is the content of Cr (mass%) in the base metal, [Cw] is the content of C (mass%) in the weld metal, and [Cm] is the content of C (mass%) in the base metal.

[Math. 4]

$$([Crw]/[Crm])\times([Cm]/[Cw]) \leq 15$$

Next, the components contained in the base metal and weld metal which constitute the overlay weld according to this embodiment are explained.

(Base Metal)

As the base metal, use can be made of a base metal which is in common use in applications where the overlay weld according to this embodiment is to be used. Specifically, a steel material having the composition described above is used. With respect to Si, Mn, P, S, Cu, Ni, and N which are components whose contents are to be regulated, the composition may contain completely no such component (that is, 0 mass%). However, since reducing the contents of those components to an extremely low level results in an increase in production cost, as the lower limit thereof, the content of each component is above 0 mass% from the standpoint of cost-effectiveness. Examples of steels having such a composition include heat-resistant steels excellent in terms of high-temperature strength and long-term reliability, such as 2.25Cr-1Mo steel, 2.25Cr-1Mo-V steel, and 9Cr-1Mo-V steel.

(Weld Metal)

<Ni: 9 to 11 mass%>

Ni is one of the essential elements for the stainless steel, and has the effect of stabilizing the austenite phase. However, when the Ni content of the weld metal is less than 9 mass%, there are cases where the austenite phase cannot be maintained. Meanwhile, in a case where the Ni content of the weld metal exceeds 11 mass%, this leads to an increase in production cost and there are even cases where the proportion of the ferrite phase in the weld metal is reduced excessively. Consequently, the Ni content of the weld metal is 9 to 11 mass%.

<Cr: 18 to 21 mass%>

Cr is an element which improves the corrosion resistance, and is one of the essential elements for the stainless steel. However, in a case where the Cr content of the weld metal is less than 18 mass%, it is difficult to enable the stainless steel to exhibit corrosion resistance, which is a basic property required thereof. Meanwhile, when the Cr content thereof exceeds 21 mass%, there are cases where the ferrite phase in the weld metal cannot be maintained, resulting in high-temperature cracking. Consequently, the Cr content of the weld metal is 18 to 21 mass%.

<Nb: 0.1 to 1 mass%>

Nb is one of elements which fix the carbon contained in the weld metal to improve the corrosion resistance of the stainless steel. However, in a case where the Nb content of the weld metal is less than 0.1 mass%, carbon fixation is insufficient. In a case where the Nb content exceeds 1 mass%, the amount of solute Nb is increased to excessively heighten the amount of ferrite. Consequently, the Nb content of the weld metal is 0.1 to 1 mass%.

<C: 0.08 mass% or less>

C is an element which combines with Cr to form a compound. In a case where the C content of the weld metal exceeds 0.08 mass%, a local decrease in solute Cr content occurs, resulting in a decrease in corrosion resistance. Consequently, the C content of the weld metal is regulated to 0.08 mass% or less. C is contained in welding materials and fluxes and is an element which would be contained in the weld metal even when not added deliberately. Since excessively reducing the C content necessitates an enormous cost, it is preferred from the standpoint of cost-effectiveness to regulate the C content to 0.005 mass% or higher.

<Si: 1.0 mass% or less>

Si has conventionally been regarded as an element which accelerates the formation of a $\sigma$ phase. In a case where the Si content exceeds 1.0 mass%, the weld metal may embrittle. Consequently, the Si content of the weld metal is regulated to 1.0 mass% or less. It is, however, desirable that Si should be contained in a slight amount from the standpoint of ensuring melt flowability. The Si content is preferably 0.1 mass% or higher, more preferably 0.15 mass% or higher.

<Mn: 0.9 mass% or less>

Mn is an element which is important for obtaining some of the effects of the present invention. By regulating the Mn content in the weld metal, which satisfies the mathematical expression 3, to 0.9 mass% or less, the weld metal can be inhibited from cracking. From the standpoint of improving the ductility of the weld metal, the Mn content is preferably 0.8 mass% or less, more preferably 0.7 mass% or less. However, since excessively reducing the Mn content of the weld metal results in an increase in cost, it is preferable that the Mn content should be 0.2 mass% or higher.

<Mo: 0.75 mass% or less>

Mo is an element which improves the corrosion resistance. However, since the present invention involves a base metal which contains Mo, the weld metal would contain some of the Mo as the base metal is diluted. In a case where the Mo content exceeds 0.75 mass%, the weld metal is prone to embrittle. Consequently, the Mo content of the weld metal is regulated to 0.75 mass% or less. However, since excessively reducing the Mo content of the weld metal results in an increase in cost, it is preferable that the Mo content should be 0.05 mass% or higher.

<V: 0.15 mass% or less>

V is an element which highly stabilizes the ferrite. In a case where the V content exceeds 0.15 mass%, the amount of ferrite in the weld metal increases excessively. Consequently, the V content of the weld metal is regulated to 0.15 mass% or less. The weld metal may contain completely no V (that is, 0 mass%). However, reducing the content thereof to an extremely low level results in an increase in production cost. Consequently, as the lower limit thereof, the V content is above 0 mass% from the standpoint of cost-effectiveness. A more preferred lower limit thereof is 0.01 mass%.

<P: 0.04 mass% or less>

P is an inevitable impurity. In a case where the P content exceeds 0.04 mass%, the weld metal is prone to suffer weld cracking. Consequently, the P content of the weld metal is regulated to 0.04 mass% or less. The weld metal may contain completely no P (that is, 0 mass%). However, since P would be unavoidably incorporated into the weld metal, reducing the content thereof to an extremely low level results in an increase in production cost. Consequently, as the lower limit thereof, the P content is above 0 mass% from the standpoint of cost-effectiveness. A more preferred lower limit thereof is 0.005 mass%.

<S: 0.03 mass% or less>

S is an inevitable impurity. In a case where the S content exceeds 0.03 mass%, this weld metal is brittle. Consequently, the S content of the weld metal is regulated to 0.03 mass% or less. The weld metal may contain completely no S (that is, 0 mass%). However, since S would be unavoidably incorporated into the weld metal, reducing the content thereof to an extremely low level results in an increase in production cost. Consequently, as the lower limit thereof, the S content is above 0 mass% from the standpoint of cost-effectiveness. A more preferred lower limit thereof is 0.003 mass%.

<Cu: 0.75 mass% or less>

Cu is an inevitable impurity. In a case where the Cu content exceeds 0.75 mass%, there are cases where this weld metal is excessively hardened. Consequently, the Cu content of the weld metal is regulated to 0.75 mass% or less. The Cu content is preferably 0.50 mass% or less, more preferably 0.20 mass% or less, even more preferably 0.05 mass% or less. The weld metal may contain completely no Cu (that is, 0 mass%). However, since Cu would be unavoidably incorporated into the weld metal, reducing the content thereof to an extremely low level results in an increase in production cost. Consequently, as the lower limit thereof, the Cu content is above 0 mass% from the standpoint of cost-effectiveness. A more preferred lower limit thereof is 0.01 mass%.

<N: 0.08 mass% or less>

N is one of inevitable impurities. In a case where the N content of the weld metal exceeds 0.08 mass%, the content of solute Cr undesirably decreases due to nitride formation. Consequently, the N content of the weld metal is regulated to 0.08 mass% or less. The weld metal may contain completely no N (that is, 0 mass%). However, since N would be unavoidably incorporated into the weld metal, reducing the content thereof to an extremely low level results in an increase in production cost. Consequently, as the lower limit thereof, the N content is above 0 mass% from the standpoint of cost-effectiveness. A more preferred lower limit is 0.005 mass%.

<Remainder>

Components other than those described above in the weld metal, i.e., the remainder of the weld metal, are Fe and inevitable impurities. Besides P, S, Cu, and N, which were described above, examples of the inevitable impurities include Sn, Pb, Sb, As, Se, Zn, Ca, Al, Mg, Ti, Zr, Y, Ta, Hf, Sc, Co, and Ag. Even when these components are contained in the weld metal, this does not affect the effects of the present invention.

$$<Cr+Mo+1.5Si+0.5Nb+2.5Mn-0.2Ni+30C \leq 21.5>$$

The ductility of the weld metal can be improved by regulating the Mn content to 0.9 mass% or less and regulating the weld metal so as to have a composition which satisfies the mathematical expression 3 shown above. By regulating the weld metal so as to have a composition which satisfies the mathematical expression 3, cracking can be inhibited from occurring upon a bending deformation in the ferrite phase present in the solidified structure which has undergone a higher-temperature PWHT.

Meanwhile, in a case where the composition of the weld metal does not satisfy the mathematical expression 3 and the value of the parameter ($[Cr]+[Mo]+1.5\times[Si]+0.5\times[Nb]+2.5\times[Mn]-0.2\times[Ni]+30\times[C]$) shown as the left side of the mathematical expression 3 exceeds 21.5, the weld metal obtained through a PWHT conducted under high-temperature conditions has insufficient ductility and the ferrite phase within the weld metal is prone to crack. From the standpoint of improving the ductility of the weld metal, the value of the parameter shown as the left side of the mathematical expression 3 is preferably 21 or less, more preferably 20 or less.

(Relationship between C content and Cr content in the Base Metal and the Weld Metal)

Even when the base metal and the weld metal have been regulated so as to have compositions within the ranges described above, the overlay weld cannot always have sufficiently improved crack resistance. In particular, in the case of overlay welds which have undergone a high-temperature PWHT, the bonding boundary region between the base metal and the weld metal has reduced ductility and there are cases where cracking occurs in this region upon a bending deformation.

The decrease in the ductility of the bonding boundary region is attributable to hardening of the boundary layer due to a reaction between the Cr of the weld metal and the C of the base metal. Because of this, in the overlay weld according to this embodiment, the base metal and the weld metal are configured so that the difference in each of Cr content and C content between the base metal and the weld metal is small. Specifically, the base metal and the weld metal are configured so that the Cr content and C content of the base metal and the Cr content and C content of the weld metal satisfy the mathematical expression 4 given above. Thus, the ductility of the bonding boundary region between the base metal and the weld metal can be improved.

Meanwhile, in a case where the composition of the weld metal and that of the base metal do not satisfy the mathematical expression 4 and the value of $\{(Crw/Crm) \times (Cm/Cw)\}$ shown as the left side of the mathematical expression 4 exceeds 15, the bonding boundary region between the base metal and the weld metal has insufficient ductility when the weld has undergone a high-temperature PWHT. This bonding boundary region is prone to readily crack upon a bending deformation. From the standpoint of improving the ductility of the bonding boundary region, the value of $\{(Crw/Crm) \times (Cm/Cw)\}$ shown as the left side of the mathematical expression 4 is preferably 14 or less, more preferably 13 or less.

[Formation Method]

A method for forming the overlay weld according to this embodiment is explained below. The overlay weld according to this embodiment can be formed by subjecting a base metal having the composition described above to overlay welding, for example, by SAW (submerged-arc welding) or ESW (electroslag welding). Welding methods are not limited to SAW and ESW, and any of various welding methods can be applied so long as the method yields a weld metal having the composition described above.

The welding material to be used when forming the overlay weld according to this embodiment can be one which has a composition corresponding to the components of the weld metal. However, there are cases where use of a welding material in which the concentrations of Cr and Nb, which are prone to be oxidized and consumed during the welding, have been heightened beforehand makes it easy to obtain the desired components. It is also possible to regulate the components of the weld metal by adding raw materials to the flux to be used during the welding. The composition of the weld metal can be regulated also by changing the kind of flux or by adding raw materials.

In the case where the overlay weld is a large device, it is preferable that a strip-electrode overlay welding material having a small thickness and a large width should be used as the welding material. For example, when a strip-shaped welding material having a thickness of 0.8 mm or less and a width of 15 mm or larger is used, not only the base metal can be efficiently welded over a large area as compared with linear welding materials having a diameter of 2 mm but also a relatively flat weld metal can be formed.

Processes for producing the base metal are not particularly limited. It is, however, necessary that both a quenching treatment in a temperature range where an austenite structure is formed and a tempering treatment in a temperature range where austenitizing does not occur should be performed to form a tempering martensite structure beforehand. For example, the base metal can be produced by conducting melting and casting to produce a steel slab so as to result in the composition described above, thereafter hot-working the steel slab to form a plate material, and subjecting the plate material to a quenching treatment under the temperature conditions of 1,000°C or higher and then to a tempering treatment under the temperature conditions of about 600 to 750°C.

As described above in detail, the overlay weld according to this embodiment has been configured so that the contents of components in the base metal, which is a heat-resistant structural material, and in the weld metal are within specific ranges and that the base metal and the weld metal respectively have compositions which satisfy the mathematical expressions 3 and 4 shown above. Because of this, the welds can have improved bending crack resistance. The overlay welds which have undergone a high-temperature PWHT hence have improved deformability. Consequently, it is possible to obtain an overlay weld in which the overlay-welded joints are less apt to suffer cracking or separation even when thermal stress is imposed thereon due to the operation and stops of the high-temperature heat-resistant apparatus.

Examples

The effect of the present invention is specifically explained below by reference to Examples according to the present invention and Comparative Examples. In the following Examples, base metals differing in composition and strip electrodes differing in composition were used to conduct overlay welding, and the overlay weld metals obtained were evaluated for bending crack resistance.

[Method for Producing Base Metals]

Base metals were produced by producing steel materials having the compositions indicated by Nos. A to M in Table 1, through melting, casting, and forging, and subjecting the steel materials to a quenching treatment at 1,020 to 1,060°C and then to a tempering treatment at 670 to 775°C. The remainder of each of the base-metal compositions shown in Table 1 is Fe and inevitable impurities. Although the table includes no mention of Cu, the Cu content in each example was 0.3 mass% or less. Base metals Nos. A to H and J to M each have a composition within the range according to the present invention, while base metal No. I is a comparative example in which the C content is outside the range according to the present invention.

[Table 1]

| No. | Composition of base metal (mass%) | | | | | | | | | | |
|-----|------|------|------|-------|-------|------|-----|-------|------|------|-------|
|     | C    | Si   | Mn   | P     | S     | Ni   | Cr  | Nb    | V    | Mo   | N     |
| A   | 0.1  | 0.26 | 0.50 | 0.009 | 0.001 | 0.33 | 8.9 | 0.070 | 0.22 | 0.94 | 0.049 |
| B   | 0.11 | 0.26 | 0.51 | 0.010 | 0.001 | 0.33 | 8.8 | 0.072 | 0.21 | 0.95 | 0.050 |
| C   | 0.09 | 0.32 | 0.48 | 0.017 | 0.002 | 0.30 | 8.6 | 0.060 | 0.23 | 0.90 | 0.062 |
| D   | 0.09 | 0.21 | 0.48 | 0.014 | 0.001 | 0.27 | 9.1 | 0.083 | 0.19 | 0.88 | 0.040 |
| E   | 0.11 | 0.33 | 0.48 | 0.016 | 0.001 | 0.19 | 9.2 | 0.046 | 0.02 | 1.03 | 0.004 |
| F   | 0.12 | 0.44 | 0.56 | 0.014 | 0.002 | 0.26 | 5.6 | 0.083 | 0.24 | 0.88 | 0.046 |
| G   | 0.11 | 0.22 | 0.36 | 0.020 | 0.001 | 0.37 | 4.5 | 0.064 | 0.20 | 0.95 | 0.022 |
| H   | 0.08 | 0.45 | 0.54 | 0.019 | 0.001 | 0.23 | 2.9 | 0.063 | 0.33 | 0.96 | 0.001 |
| I   | 0.14 | 0.23 | 0.59 | 0.013 | 0.002 | 0.17 | 2.5 | 0.077 | 0.28 | 1.04 | 0.002 |
| J   | 0.11 | 0.45 | 0.54 | 0.019 | 0.001 | 0.23 | 2.7 | 0.063 | 0.33 | 0.96 | 0.001 |
| K   | 0.12 | 0.23 | 0.55 | 0.013 | 0.002 | 0.17 | 2.3 | 0.091 | 0.28 | 1.04 | 0.002 |
| L   | 0.11 | 0.33 | 0.50 | 0.011 | 0.002 | 0.31 | 8.9 | 0.061 | 0.23 | 1.02 | 0.050 |
| M   | 0.12 | 0.39 | 0.44 | 0.018 | 0.002 | 0.22 | 9.5 | 0.087 | 0.19 | 0.91 | 0.043 |

[Welding Method]

An overlay weld metal having a thickness of about 5 mm was formed on a surface of each of the base metals Nos. A to M shown in Table 1, by overlay welding of the ESW (electroslag welding) type using a strip electrode having a width of 75 mm. The welding conditions included a current of 1,400 A, a welding speed of 18 cm/min, and one-layer deposition. After the welding, a 32-hour heat treatment was performed as a PWHT under the conditions of 775°C. Thus, welded specimens for evaluation were obtained.

[Evaluation Method]

The welded specimens produced by the method described above were evaluated in the following manner. Each specimen was roughly cut into a shape in which the base metal portion had a thickness of 10 mm and the width, as measured along the direction perpendicular to the welding direction, was 70 mm, and this cut specimen was further sliced into pieces so that the thickness direction of each test piece to be obtained was the welding direction. These pieces were mechanically polished to produce bending test pieces having the thicknesses shown later. The dimensions of each bending test piece were 70 mm in length, 15 mm in width, and 3 mm in thickness, and a 5-mm portion of the width of 15 mm was accounted for by the overlay weld metal.

A bending test was performed by a three-point bending method using a general-purpose tensile/compression tester. Two rollers serving as holding-side rollers were horizontally disposed in parallel with each other on the pedestal of the tester, and a test piece was then placed on the rollers. A punch having a semi-circular end was forced into the central part between the rollers to thereby give a bending deformation. In this test, each test piece was oriented so that the length (70 mm) sides were perpendicular to the axial direction of the rollers. Namely, the punch was pushed into each test piece in a direction parallel with the welding direction.

In the bending test, test pieces produced in thicknesses of 1.5 mm, 2.5 mm, and 3.5 mm were examined using punches respectively having end radii of 2 mm, 3 mm, and 6 mm. Bending deformations differing in radius were given in accordance with test piece thickness/punch end radius combinations. The distance between the rollers was set so as to be equal to the sum of the diameter of the end of the punch and two times the thickness of the test piece. The amount of tensile strain on that surface of each test piece which was on the outer side after the bending deformation was taken as bending strain, and tests which resulted in bending strains of 11%, 17%, 20%, 23%, 28%, 29%, and 37% in accordance with the plate thickness/punch diameter combinations were performed. In each test, the number of examined test pieces was 2 (N=2) for each kind of steel.

Whether cracks had occurred or not through the bending test was ascertained with the naked eye and a stereomicroscope. The largest strain amount which resulted in no cracking in each of the two test pieces (N=2) was taken as bending crack resistance. The results thereof are shown in Table 2 below. In Table 2 are also shown the compositions of the weld metals obtained. The components of each strip electrode used for the welding were substantially the same as the components of the corresponding weld metal shown in Table 2. In the composition of each weld metal shown in Table 2, the remainder was Fe and inevitable impurities. Although the table includes no mention of Cu, the Cu content in each example was 0.05 mass% or less.

[Table 2]

| | Specimen No. | Base metal No. | Composition of weld metal (mass%) | | | | | | | | | | | Mathematical expression 3 | Mathematical expression 4 | Bending crack resistance |
|---|---|---|---|---|---|---|---|---|---|---|---|---|---|---|---|---|
| | | | C | Si | Mn | P | S | Ni | Cr | Nb | V | Mo | N | | | |
| Example | 1 | A | 0.03 | 0.46 | 0.50 | 0.01 | 0.01 | 10.4 | 19.8 | 0.51 | 0.03 | 0.14 | 0.042 | 20.9 | 7.4 | 23 |
| Example | 2 | A | 0.03 | 0.46 | 0.50 | 0.01 | 0.01 | 9.7 | 18.7 | 0.26 | 0.026 | 0.12 | 0.043 | 19.7 | 7.0 | 37 |
| Example | 3 | B | 0.03 | 0.45 | 0.51 | 0.01 | 0.01 | 10.2 | 19.7 | 0.28 | 0.028 | 0.13 | 0.044 | 20.9 | 8.2 | 27 |
| Example | 4 | B | 0.02 | 0.49 | 0.59 | 0.01 | 0.01 | 10.1 | 18.8 | 0.25 | 0.022 | 0.11 | 0.070 | 19.8 | 11.8 | 37 |
| Example | 5 | C | 0.03 | 0.63 | 0.52 | 0.025 | 0.01 | 10.8 | 18.7 | 0.34 | 0.044 | 0.42 | 0.034 | 20.3 | 6.5 | 29 |
| Example | 6 | C | 0.02 | 0.23 | 0.74 | 0.01 | 0.01 | 10.9 | 20.2 | 0.43 | 0.067 | 0.19 | 0.039 | 21.3 | 10.6 | 23 |
| Example | 7 | D | 0.03 | 0.47 | 0.32 | 0.01 | 0.01 | 10.0 | 20.8 | 0.25 | 0.023 | 0.10 | 0.055 | 21.3 | 6.9 | 23 |
| Comparative Example | 8 | D | 0.02 | 0.45 | 1.49 | 0.01 | 0.01 | 10.2 | 19.2 | 0.49 | 0.028 | 0.13 | 0.047 | 22.5 | 9.5 | 17 |
| Example | 9 | E | 0.02 | 0.49 | 0.74 | 0.02 | 0.01 | 9.6 | 19.2 | 0.39 | 0.059 | 0.11 | 0.037 | 20.9 | 11.5 | 23 |
| Comparative Example | 10 | E | 0.030 | 0.63 | 0.88 | 0.01 | 0.01 | 10.2 | 19.4 | 0.46 | 0.069 | 0.24 | 0.047 | 21.9 | 7.7 | 17 |
| Example | 11 | F | 0.03 | 0.64 | 0.63 | 0.02 | 0.010 | 10.5 | 19.4 | 0.46 | 0.075 | 0.19 | 0.040 | 21.2 | 13.9 | 20 |
| Comparative Example | 12 | F | 0.02 | 0.43 | 0.68 | 0.01 | 0.01 | 10.9 | 18.2 | 0.55 | 0.034 | 0.19 | 0.039 | 19.5 | 19.5 | 11 |
| Example | 13 | G | 0.04 | 0.55 | 0.71 | 0.01 | 0.010 | 10.1 | 18.2 | 0.44 | 0.044 | 0.20 | 0.041 | 20.3 | 11.1 | 29 |
| Comparative Example | 14 | G | 0.03 | 0.41 | 0.52 | 0.01 | 0.01 | 9.8 | 19.8 | 0.29 | 0.023 | 0.11 | 0.045 | 20.8 | 16.1 | 11 |
| Example | 15 | H | 0.05 | 0.44 | 0.61 | 0.01 | 0.01 | 10.2 | 19.0 | 0.47 | 0.028 | 0.13 | 0.046 | 21.1 | 10.5 | 23 |
| Comparative Example | 16 | I | 0.04 | 0.46 | 0.50 | 0.006 | 0.011 | 9.7 | 18.7 | 0.26 | 0.026 | 0.12 | 0.043 | 20.0 | 26.2 | <11 |
| Comparative Example | 17 | J | 0.03 | 0.5 | 1.37 | 0.02 | 0.01 | 10.5 | 18.7 | 0.41 | 0.044 | 0.12 | 0.034 | 22.1 | 25.4 | <11 |
| Comparative Example | 18 | K | 0.04 | 0.38 | 0.81 | 0.02 | 0.010 | 9.8 | 20.4 | 0.27 | 0.045 | 0.11 | 0.032 | 22.6 | 26.6 | <11 |

(continued)

| | Specimen No. | Base metal No. | Composition of weld metal (mass%) | | | | | | | | | | | Mathematical expression 3 | Mathematical expression 4 | Bending crack resistance |
|---|---|---|---|---|---|---|---|---|---|---|---|---|---|---|---|---|
| | | | C | Si | Mn | P | S | Ni | Cr | Nb | V | Mo | N | | | |
| Comparative Example | 19 | L | 0.04 | 0.66 | 0.77 | 0.02 | 0.01 | 10.4 | 19.3 | 0.46 | 0.071 | 0.21 | 0.043 | 21.8 | 6.0 | 17 |
| Comparative Example | 20 | M | 0.03 | 0.22 | 1.49 | 0.02 | 0.010 | 9.5 | 19.6 | 0.36 | 0.062 | 0.14 | 0.036 | 23.0 | 8.3 | 11 |

Specimens Nos. 1 to 7, 9, 11, 13, and 15 shown in Table 2 are Examples within the scope of the present invention, while specimens Nos. 8, 10, 12, 14, and 16 to 20 are Comparative Examples, which are outside the scope of the present invention. FIG. 1 is a graphic presentation in which the product of the Cr content ratio between each weld metal and the corresponding base metal and the C content ratio therebetween has been plotted as abscissa, the product being represented by the mathematical expression 4, and a parameter calculated from the contents of components of each weld metal has been plotted as ordinate, the parameter being represented by the mathematical expression 3. This graphic presentation shows relationships between these two values in specimens of the Examples and Comparative Examples. It can be seen from FIG. 1 that the specimens of the Examples are within the range where both the mathematical expression 3 and mathematical expression 4 are satisfied.

As shown in Table 2, the specimens of the Comparative Examples each had a bending crack resistance of 17 or less, whereas the specimens of the Examples each showed a satisfactory bending crack resistance of 20 or higher. Specimens Nos. 12, 14, and 16 are Comparative Examples which satisfy the mathematical expression 3 but do not satisfy the mathematical expression 4, while specimens Nos. 8, 10, 19, and 20 are Comparative Examples which satisfy the mathematical expression 4 but do not satisfy the mathematical expression 3. These specimens each have a bending crack resistance of 17 or less, which is poorer than those of the specimens of the Examples. It can therefore be seen that the effect of the present invention cannot be obtained if both of the mathematical expression 3 and the mathematical expression 4 are not satisfied.

It was ascertained from those results that an overlay weld having excellent bending crack resistance can be obtained by configuring the base metal and the weld metal so as to satisfy the component ranges and conditional expressions specified in the present invention.

While the present invention has been described in detail and with reference to specific embodiments thereof, it will be apparent to one skilled in the art that various changes and modifications can be made therein without departing from the spirit and scope thereof.

This application is based on a Japanese patent application No. 2014-120757 filed on June 11, 2014, the contents of which are incorporated herein by reference.

Industrial Applicability

The overlay weld of the present invention is excellent in terms of the bending crack resistance of the welds after a high-temperature PWHT, and is hence useful as, for example, pressure vessels for chemical plants.

**Claims**

1. An overlay weld in which a weld metal has been overlay-welded on a surface of a base metal, wherein
the base metal has a composition which contains 0.07 to 0.12 mass% of C, 2.0 to 10 mass% of Cr, 0.5 to 1.5 mass% of Mo, 0.02 to 0.5 mass% of V, and 0.01 to 0.2 mass% of Nb, and has an Si content regulated to 0.6 mass% or less, an Mn content regulated to 1 mass% or less, a P content regulated to 0.04 mass% or less, an S content regulated to 0.02 mass% or less, a Cu content regulated to 0.3 mass% or less, an Ni content regulated to 0.6 mass% or less, and an N content regulated to 0.1 mass% or less, with the remainder being Fe and inevitable impurities,
the weld metal has a composition which contains 9 to 11 mass% of Ni, 18 to 21 mass% of Cr, and 0.1 to 1 mass% ofNb, and has a C content regulated to 0.08 mass% or less, an Si content regulated to 1.0 mass% or less, an Mn content regulated to 0.9 mass% or less, a P content regulated to 0.04 mass% or less, an S content regulated to 0.03 mass% or less, a Cu content regulated to 0.75 mass% or less, an Mo content regulated to 0.75 mass% or less, a V content regulated to 0.15 mass% or less, and an N content regulated to 0.08 mass% or less, with the remainder being Fe and inevitable impurities, and which satisfies the following mathematical expression (A), where [Cr] is the content of Cr (mass%), [Mo] is the content of Mo (mass%), [Si] is the content of Si (mass%), [Nb] is the content of Nb (mass%), [Mn] is the content of Mn (mass%), [Ni] is the content of Ni (mass%), and [C] is the content of C (mass%), and
the overlay weld satisfies the following mathematical expression (B), where [Crw] is the content of Cr (mass%) in the weld metal, [Crm] is the content of Cr (mass%) in the base metal, [Cw] is the content of C (mass%) in the weld metal, and [Cm] is the content of C (mass%) in the base metal.
[Math. 1]

$$[Cr]+[Mo]+1.5\times[Si]+0.5\times[Nb]+2.5\times[Mn]-0.2\times[Ni]+30\times[C] \leq 21.5 \ldots (A)$$

$$([Crw]/[Crm]) \times ([Cm]/[Cw]) \leq 15 \dots (B)$$

FIG. 1

## INTERNATIONAL SEARCH REPORT

| International application No. |
| --- |
| PCT/JP2015/066944 |

**A. CLASSIFICATION OF SUBJECT MATTER**
*B23K35/30*(2006.01)i, *C22C38/00*(2006.01)i, *C22C38/24*(2006.01)i, *C22C38/48*(2006.01)i

According to International Patent Classification (IPC) or to both national classification and IPC

**B. FIELDS SEARCHED**

Minimum documentation searched (classification system followed by classification symbols)
B23K35/00-35/40, C22C38/00-38/60

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 64-10317 B2  (Kobe Steel, Ltd.), 21 February 1989 (21.02.1989), claims 1 to 2; page 4, right column, line 42 to page 5, right column, line 17; table 3, example no.3, 11, 37 (Family: none) | 1 |
| A | JP 63-69941 A  (NKK Corp.), 30 March 1988 (30.03.1988), claims 1 to 4; page 3, lower right column, line 14 to page 4, upper left column, line 11; steel H according to the present invention on table 2 (Family: none) | 1 |

[X] Further documents are listed in the continuation of Box C.          [ ] See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 18 August 2015 (18.08.15) | 25 August 2015 (25.08.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/066944

C (Continuation).    DOCUMENTS CONSIDERED TO BE RELEVANT

| Category* | Citation of document, with indication, where appropriate, of the relevant passages | Relevant to claim No. |
|---|---|---|
| A | JP 60-121098 A  (Kawasaki Steel Corp.),<br>28 June 1985 (28.06.1985),<br>claims<br>(Family: none) | 1 |
| A | JP 61-115674 A  (Kawasaki Steel Corp.),<br>03 June 1986 (03.06.1986),<br>claims<br>(Family: none) | 1 |
| A | JP 62-68693 A  (Toshiba Corp.),<br>28 March 1987 (28.03.1987),<br>claims 1 to 9<br>(Family: none) | 1 |
| A | JP 62-64493 A  (Toshiba Corp.),<br>23 March 1987 (23.03.1987),<br>claims 1 to 12<br>(Family: none) | 1 |
| A | JP 58-199847 A  (Nippon Steel Corp.),<br>21 November 1983 (21.11.1983),<br>claims 1 to 4<br>(Family: none) | 1 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014001702 A
- JP H03264647 A

- JP 2014120757 A